# EUROPEAN PATENT SPECIFICATION

(11) **EP 2 425 134 B1**
(45) Date of publication and mention of the grant of the patent: **05.06.2019**
(21) Application number: 10772416.3
(22) Date of filing: 18.03.2010
(51) Int. Cl.: F04B 39/10, F04B 53/10, F16K 27/02, F16K 15/03

(54) **COMPRESSOR VALVE ARRANGEMENT**
KOMPRESSORVENTILANORDNUNG
AGENCEMENT DE SOUPAPE DE COMPRESSEUR

(30) Priority: 27.04.2009 US 172947 P
(43) Date of publication of application: 07.03.2012
(73) Proprietor: Carrier Corporation, Farmington, CT 06034 (US)
(72) Inventor: NIETER, Jeffrey, J., Coventry, Connecticut 06238 (US)
(74) Representative: Dehns
(86) International application number: PCT/US2010/027818
(87) International publication number: WO 2010/129098

(56) References cited:
- EP-A2- 0 955 463
- GB-A- 891 313
- JP-A- 10 141 231
- KR-A- 20060 096 003
- KR-Y1- 0 129 804
- KR-Y1- 200 255 957
- US-A- 5 213 125
- US-A- 5 228 468
- US-A1- 2001 047 718
- US-A1- 2007 201 990
- US-A1- 2007 221 274

## Description

The subject matter disclosed herein relates to a compressor and in particular to a piston compressor having a skewed or offset valve arrangement.

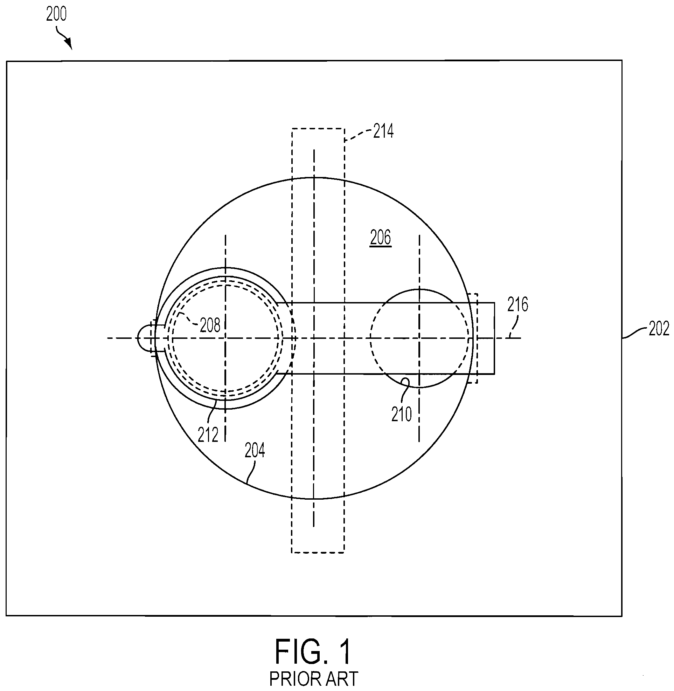

Compressors, such as a reciprocating or piston compressor 200 for example, typically have a crankcase 202 with a cylinder 204 housing a piston as shown in Figure 1. The piston is coupled to a motor that moves the piston within the cylinder to draw in and compress a gas. A valve plate 206 with a suction port 208 and a discharge port 210 is arranged over one end of the cylinder 204. Each port 208, 210 includes a valve, such as suction valve 212 for example, that is arranged to be normally closed and only opens when the differential pressure across the valve, in the direction of opening, exceeds a level sufficient to overcome valve stiffness and other forces. During operation, the suction valve 212 opens into the cylinder 204 as the piston moves away from the valve plate 206. This draws a gas, such as air for example, from a suction plenum into the cylinder 204. When the piston reverses its motion, moving toward the valve plate 206, the gas in the cylinder 204 is compressed and the suction valve 212 closes. Once the cylinder pressure has surpassed the discharge pressure by a sufficient differential, a discharge valve opens, transferring the compressed gas to a discharge plenum.

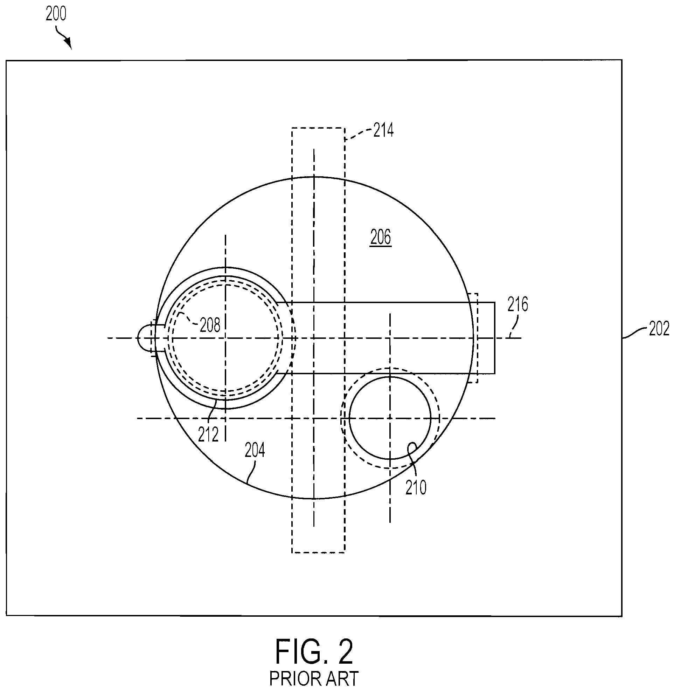

It is desirable to size the suction valve 212 and discharge valve to maximize the performance of the compressor 200. However, the size of the valve needs to be offset against other constraints. For example, a wall or bulkhead 214 separates the suction plenum from the discharge plenum. The bulkhead needs to be of sufficient size to withstand the differential pressure between the plenums and also provide support for the valve plate 206. This reduces the available area for the valves and valve ports 208, 210 without interfering with one or more other components. For example, it is desirable to have the suction valve 212 placed on the diametral axis 216 of the cylinder to provide symmetric support for the ends of the valve 212. To avoid covering the discharge port 210 with the suction valve 212, the discharge port 210 is moved off the diametral axis 216 as shown in Figure 2. This decreases the space available for the discharge port 210 resulting in a port size that is less than desirable for efficient operation of the compressor 200.

US 5213125 discloses a valve plate assembly having two inlet ports and two outlet ports. The inlet ports are covered by opposite ends of a flapper valve, where the flapper valve is attached to the valve plate at its centre.

GB 891313 discloses a valve assembly of a cylinder block, wherein a valve plate comprises a discharge hole and a suction hole. A valve is provided adjacent to the discharge hole.

US 2007/221274 discloses a valve plate having a suction through hole and a discharge through hole, wherein a suction valve member is provided for closing the suction through hole.

US 2007/201990 discloses a valve plate having a suction port and a discharge port. A suction valve is incorporated in a valve blade mounted to the valve plate.

US 2001/047718 discloses a valve plate having a first and second opening each covered by a separate valve attached to opposing faces of the valve plate.

EP 0955463 discloses a compressor comprising a valve plate having a suction passage therethrough. The suction passage is covered by a reed valve that is connected at one end to the valve plate and has its second end constrained by its positioning in a recess of a crankcase.

US 5228468 discloses a reed valve having its seating motion damped by forming a plurality of depressions in the valve.

According to claim1 of the invention, there is provided a compressor comprising: a cylinder having a diametral axis; a valve plate covering said cylinder said valve plate having a suction port and a discharge port; a valve having a body with a first end coupled to said valve plate and a second end movable between a first position in contact with said suction port and a second position, wherein said cylinder includes a first relief formed on the edge of the cylinder adjacent said first end, characterised in that the suction port and the discharge port are positioned on said diametral axis, said valve is arranged on an angle to said diametral axis, and a chamfer is formed inside a recess at the edge of the cylinder, the chamfer being positioned to contact with the valve second end when in the second position.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a bottom plan view illustration of a prior art valve plate and cylinder bore in a compressor;
FIG. 2 is a bottom plan view illustration of another prior art valve plate having an offset discharge port;
FIG. 3 is a bottom plan view illustration of a valve plate and cylinder bore in a compressor in accordance with an exemplary embodiment of the invention;
FIG 4 is a side plan view illustration, partially in section, of the compressor of Figure 1;
FIG 5 is a side plan view illustration of a portion of the compressor of Figure 1;
FIG. 6 is another side plan view illustration, partially in section, of the compressor of Figure 1;
FIG. 7 is a bottom plan view illustration in accordance with another embodiment of the present invention; and,
FIG. 8 is a bottom plan view illustration in accordance with another embodiment of the present invention.

The detailed description explains embodiments of the invention, together with advantages and features, by way of example with reference to the drawings.

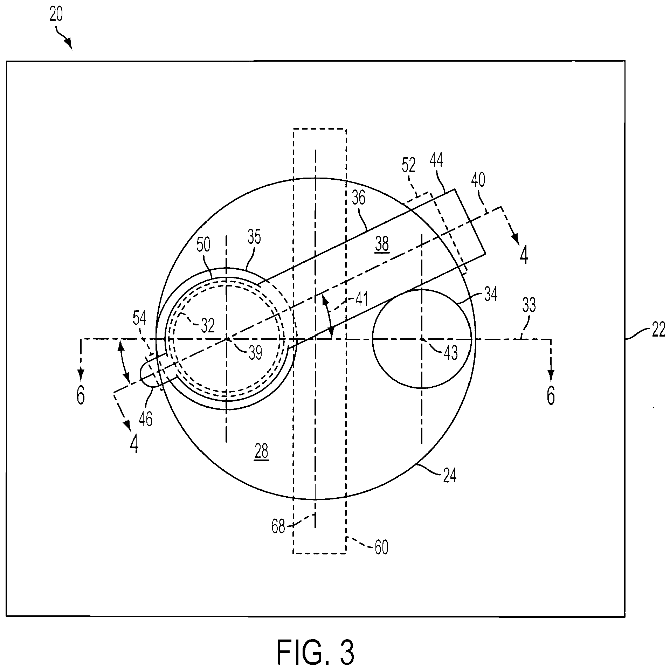

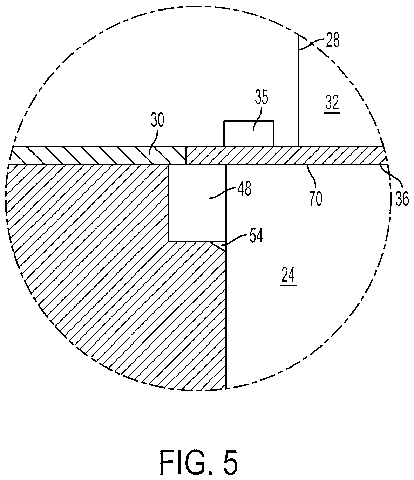

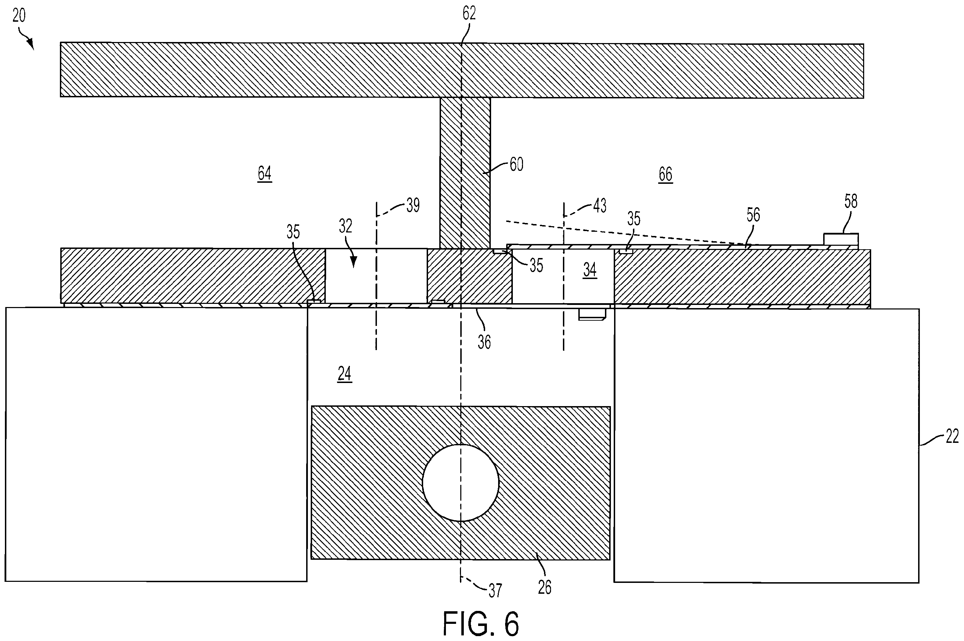

A compressor is a device used in a wide variety of applications to provide a pressurized gas. An exemplary embodiment compressor 20 is shown in Figures 3 - 6. The compressor includes a crankcase 22 having a cylinder 24. A piston 26 is arranged within the cylinder 24 and is coupled to a drive (not shown), such as a motor for example. Typically, the compressor 20 may also include other components (not shown), such as a connecting rod and a crankshaft for example, to connect the piston 26 to the motor. The compressor may further include fluid or gas control devices (not shown), such as regulators and valves for example. As will be discussed in more detail herein, the movement of the piston 26 within the cylinder 24 causes the compression and flow of the desired gas. The piston 26 will have one or more components (not shown), such as rings or seals for example, that minimizes or prevents the leakage of compressed gas around the piston 26.

Arranged along one end of the crankcase 22 covering the cylinder 24 is a valve plate 28. The valve plate 28 is typically coupled to the crankcase 22 by a plurality of bolts (not shown). The valve plate 28 includes a first surface 29 and a second surface 31 that are substantially parallel. A suction port 32 and a discharge port 34 extend through the surfaces 29, 31 to provide fluid communication to and from the cylinder 24. In the exemplary embodiment, the suction port 32 is a substantially cylindrical opening having a center axis 39. Similarly, the discharge port 34 is a substantially cylindrical opening having a center axis 43. It should be appreciated that while the cylindrical configuration of ports 32, 34 is advantageous for manufacturing and cost reasons, the ports 32, 34 may also be configured as other shapes based on the needs of an application or space availability.

In the exemplary embodiment, the center axis 39, 43 are arranged on a diametral axis 33. The diametral axis 33 is the mid-plate or symmetry plane of the axis 37 of cylinder 24. The valve plate 28 further includes a trepan 35 arranged circumferentially around the suction port 32 and discharge port 34. The trepan 35 is an annular cutout that assists in the sealing of the valve to the valve seat, and in the opening of the valve by reducing the effect of the oil stiction (surface tension) force.

Arranged between the valve plate 28 and the crank case is a seal 30 to prevent the leakage of gas from the cylinder 24. The compressor 20 also includes a valve, such as a suction reed valve 36. The valve 36 includes a body 38 having a longitudinal axis 40. A first end 44 of the body 38 is coupled between the crankcase 22 and the valve plate 28, such as by a pin 42 for example. The body 38 also includes a second end 46 opposite the first end 44. The second end 46 is positioned in a recess 48 in the crankcase 22. The body 38 further includes a seal portion 50 that is sized and shaped to cover the suction port 32 and valve seat in the valve plate 28. The seal portion 50 is generally coaxial with the center axis 39 of suction port 32. The valve 36 is made from a suitable material to allow flexure of the body 38 at desired pressures during operation.

The valve 36 is rotated about the center axis 39 of the suction port 32 such that the longitudinal axis 40 of valve 36 is on an angle 41 relative to the diametral axis 33. It should be appreciated that the rotating or skewing of the valve 36 so that the valve 36 is no longer on the diametral axis provides advantages in increasing the amount of space available for the discharge port 34. In one embodiment, the discharge port is located on the diametral axis, thereby providing for the most space between the suction port and the discharge port. In other embodiments, the valve is skewed and the discharge port is not located directly on the diametral axis. These embodiments still provide for additional space between the suction port and the discharge port.

The crankcase 22 includes a first relief, such as chamfer 52, formed on the edge of the cylinder 24 adjacent the valve 36 first end 44. A second relief, such as chamfer 54, is formed inside the recess 48 at the edge of cylinder 24. In the exemplary embodiment, each relief is in the form of a chamfer 52, 54, however, other relief shapes that provide support for the valve 36 may also be used, such as a radius for example. In one embodiment, the chamfers 52, 54 are substantially perpendicular to the longitudinal axis 40. As will be discussed in more detail below, the chamfers 52, 54 provide advantages in supporting and reducing the stresses on the valve 36 when the valve 36 is in an open position.

A second valve, such as discharge reed valve 56 is mounted to the valve plate 28 on first surface 29, such as by a bolt 58 for example. The discharge valve 56 is similar to the valve 36 in that it is sized and shaped to cover and seal the discharge port 34. The discharge valve 56 is made from a suitable material to allow flexure of the discharge valve 56 at desired pressures during operation.

The valve plate 28 is supported by a bulkhead or wall 60 that is coupled between the valve plate 28 and an end housing 62. The wall 60 provides support to the valve plate 28 against the high-pressure gas in the cylinder 24 during operation. The wall 60 further separates a suction plenum 64 from a discharge plenum 66 and is sized to withstand the pressure differential between the plenums 64, 66. In the exemplary embodiment, the wall 60 is substantially parallel to a second diametral axis 68 of cylinder 24. The diametral axis 68 is substantially perpendicular to the first diametral axis 33.

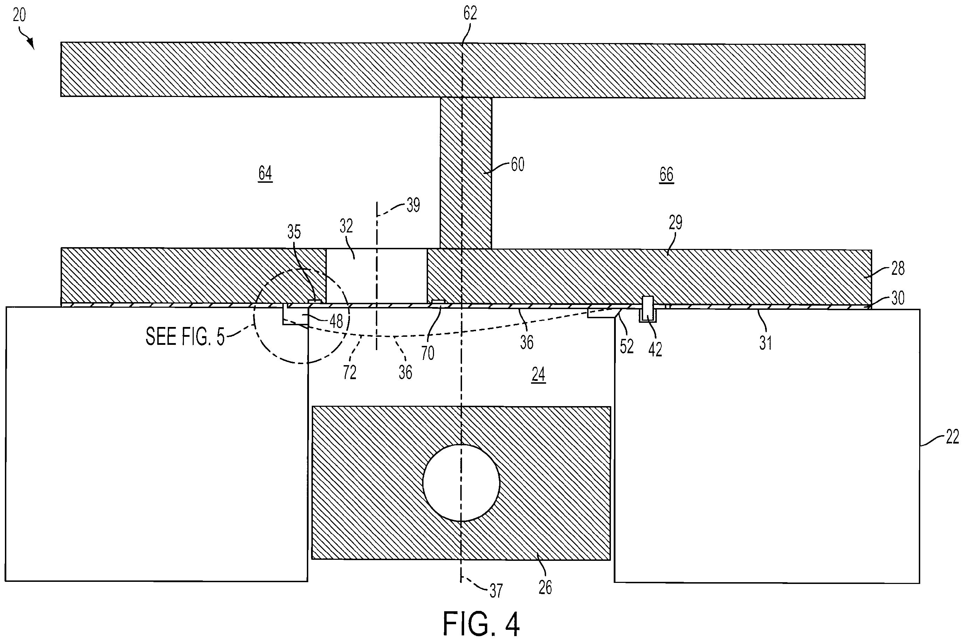

During operation, the piston 26 moves linearly within the cylinder 24. As the piston 26 moves away from the valve plate 28 causing a decrease in pressure in the cylinder 24, the valve 36 bends in reaction to this decrease in pressure causing the seal portion 50 to move away from the suction port 32. The valve 36 continues to bend from the first or initial position 70 until the second end 46 contacts the second chamfer 54 at a second or open position 72 (Figure 4). The chamfers 52, 54 provide advantages in reducing the stress on the valve 36 when in the open position 72. The chamfers 52, 54 provide a surface to support the valve 36 rather than a sharp edge. Further, since the chamfers 52, 54 are substantially perpendicular to the longitudinal axis 40, twisting of the valve 36 is minimized or eliminated. The chamfers 52, 54 improve the support of the valve 36 in the skewed position from the diametral axis 33, thus allowing more space for the discharge port 34 while also providing the level of support for the valve 36 that is comparable or improved over valves that are aligned on the diametral axis.

As the seal portion 50 disengages from the suction port 32 and valve seat, gas from the suction plenum may flow into the cylinder 24. The piston 26 will eventually reverse motion and move towards the valve plate 28 causing the valve 36 to return to the initial position 70. As volume of the cylinder 24 decreases, the pressure of the gas in the cylinder 24 increases until the discharge reed valve bends, opening the discharge port 34 to allow pressurized gas to flow into the discharge plenum 66.

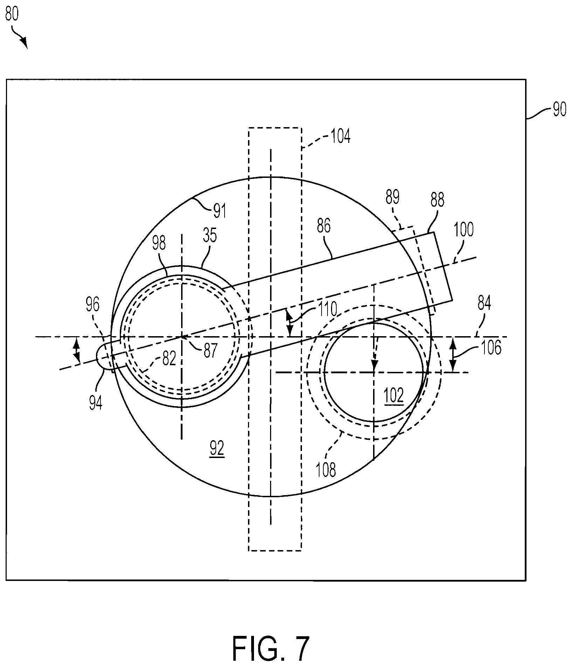

Another embodiment compressor 80 is illustrated in Figure 7. Similar to the embodiment described above, a crankcase 90 includes a cylinder 91 with a valve plate 92 arranged on one end. In this embodiment, the suction port 82 is positioned on a diametral axis 84. A valve 86 is arranged with a first end 88 mounted between the crankcase 90 and the valve plate 92 above a chamfer 89 in the crankcase 90. The valve 86 also includes a second end 94 arranged above a relief or chamfer 96 in the crankcase 90. A seal portion 98 covers the suction port 82 when the valve 86 is in the closed position. A longitudinal axis 100 extends the length of the valve 86. The valve 86 is rotated about the center 87 of suction port 82 such that the longitudinal axis 100 is on an angle 110 relative to the diametral axis 84.

The discharge port 102 is arranged in the valve plate 92 on the opposite side of a bulkhead wall 104 from the suction port 82. The wall 104 is substantially perpendicular to the diametral axis 84. In this embodiment, the discharge port 102 is offset from the diametral axis by a distance 106. In one embodiment, the offset distance 106 is arranged to maximize the diameter of the discharge port 102 without the trepan 108 interfering with the wall 104. This embodiment also provides the advantage in that the angle 110 between the diametral axis 84 and the longitudinal axis 100 is reduced while allowing the discharge port 102 to be appropriately sized.

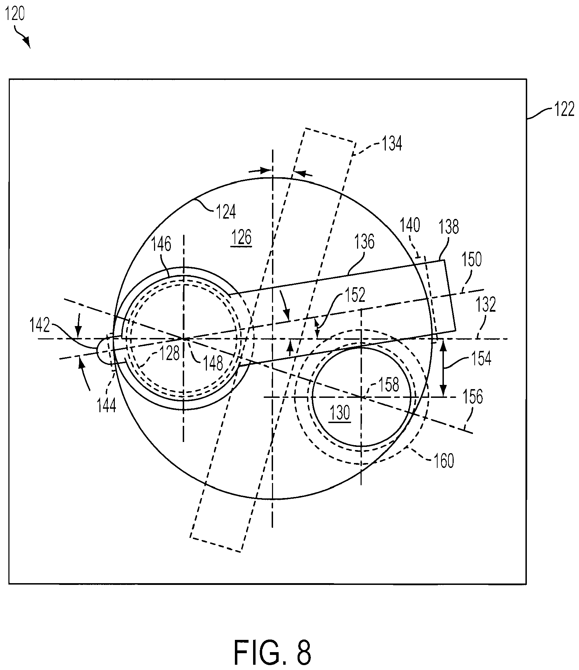

Yet another embodiment compressor 120 is illustrated in Figure 8. Similar to the embodiments described above, a crankcase 122 includes a cylinder 124. A valve plate 126 having a suction port 128 and a discharge port 130 is mounted to one end of the crankcase 122. The suction port 128 is positioned on the diametral axis 132 on one side of a bulkhead wall 134. A valve 136 having a first end 138 is mounted between the crankcase 122 and the valve plate 126 above a relief or chamfer 140 in the crankcase 122. A valve 136 second end 142 is arranged above a second relief or chamfer 144. A seal portion 146 covers the suction port 128 when the valve 136 is in the closed position. Similar to the embodiments above, the valve 136 is rotated about the center 148 of the suction port 128 such that a longitudinal axis 150 is on an angle 152 relative to the diametral axis 132.

The discharge port 130 is arranged on a side of the wall 134 opposite the suction port 128. The discharge port 130 is offset a distance 154 from the diametral axis 132. An axis 156 is defined between the center 158 of the discharge port 130 and the center 148 of the suction port 128. In this embodiment, the wall 134 is arranged substantially perpendicular to the axis 156. This provides an advantage by allowing the offset distance 154 for discharge port 130 to be increased without the discharge trepan 160 interfering with the wall 134. As a result, the angle 152 of the valve 136 may be further reduced. In some embodiments, the rotation of the wall 134 may also have additional advantages by creating additional space to increase the thickness of the wall 134. As a result, higher differential pressures may be achieved between the suction plenum and the discharge plenum.

As disclosed, some embodiments of the invention may include some of the following advantages: an ability to utilize a larger discharge port; improved support for a valve; more efficient operation of the compressor; and an increased bulkhead wall thickness allowing for higher differential pressures during operation.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A compressor (20) comprising:
a cylinder (24,91) having a diametral axis (33);
a valve plate (28) covering said cylinder (24) said valve plate (28) having a suction port (32,82,128) and a discharge port (34,102,130);
a valve (36,86) having a body (38) with a first end (44) coupled to said valve plate (28) and a second end (46) movable between a first position (70) in contact with said suction port (32,82,128) and a second position (72),
wherein said cylinder (24,91) includes a first relief (52) formed on an edge of the cylinder (24,91) adjacent said first end (44),
**characterised in that** the suction port (32,83,128) and the discharge port (34,102,130) are positioned on said diametral axis (33), said valve (36,86) is arranged at an angle (41) to said diametral axis (33), and a chamfer (54) is formed inside a recess (48) at the edge of the cylinder (24,91), the chamfer (54) being positioned to contact with the valve (36,86) second end (46) when in the second position (72).

2. The compressor (20) of Claim 1 wherein:
said valve plate (28) includes a first side (29) opposite said cylinder (24), and a second side (31) parallel to said first side (29) and adjacent said cylinder (24).

3. The compressor (20) of Claim 2 further comprising a wall (60) operably coupled to said valve plate (24) positioned between said discharge port (34) and said suction port (32).

4. The compressor (20) of Claim 3 wherein said wall (60) is arranged perpendicular to said diametral axis (33).

5. The compressor of claim 1 being a piston compressor (20) having a suction plenum (64) and a discharge plenum (66) wherein:
the suction port (32) is in fluid communication with said suction plenum (64), said valve plate (28) further having the discharge port (34) in fluid communication with said discharge plenum (66); and wherein
said valve body (38) first end (44) is coupled between a crankcase (22) and said valve plate (28).

6. The compressor (20) of Claim 5 further comprising:
a housing (62) having a wall (60) separating said suction plenum (64) from said discharge plenum (66), wherein said wall (60) extends perpendicular to an end of said housing (62);
the crankcase (22) coupled to said housing (62), wherein said cylinder (24) is arranged in said crankcase (22), said crankcase (22) further having said recess (48) adjacent said cylinder (24).

7. The compressor (20) of Claim 1 further comprising:
a crankcase (90), wherein said cylinder (91) is arranged in said crankcase (90);
a housing (62) coupled to said crankcase (90) opposite said valve plate (28), said housing (62) having a wall (104) separating a suction plenum (64) and a discharge plenum (66), wherein said suction port (82) is in fluid communication with said suction plenum (64) and said discharge port (102) is in fluid communication with said discharge plenum (66);
wherein said valve (86) is a reed valve.

8. The compressor (20) of Claim 6 or 7 wherein a wall (134) is perpendicular to an axis (156) between a center (158) of said discharge port (130) and a center (148) of said suction port (128).

9. The compressor (20) of Claim 1 wherein said first relief (52) is a chamfer.

## Patentansprüche

1. Kompressor (20), umfassend:
einen Zylinder (24, 91), der eine Durchmesserachse (33) aufweist;
eine Ventilplatte (28), die den Zylinder (24) bedeckt, wobei die Ventilplatte (28) einen Sauganschluss (32, 82, 128) und einen Auslassanschluss (34, 102, 130) aufweist;
ein Ventil (36, 86), das einen Körper (38) mit einem ersten Ende (44), das an die Ventilplatte (28) gekoppelt ist, und einem zweiten Ende (46) aufweist, das zwischen einer ersten Position (70) in Kontakt mit dem Sauganschluss (32, 82, 128) und einer zweiten Position (72) bewegbar ist,
wobei der Zylinder (24, 91) ein erstes Relief (52) beinhaltet, das an einem Rand des Zylinders (24, 91) benachbart zu dem ersten Ende (44) gebildet ist,
**dadurch gekennzeichnet, dass** der Sauganschluss (32, 83, 128) und der Auslassanschluss (34, 102, 130) auf der Durchmesserachse (33) positioniert sind, das Ventil (36, 86) in einem Winkel (41) zu der Durchmesserachse (33) angeordnet ist und eine Abschrägung (54) innerhalb einer Aussparung (48) an dem Rand des Zylinders (24, 91) gebildet ist,
wobei die Abschrägung (54) positioniert ist, um das zweite Ende (46) des Ventils (36, 86) zu kontaktieren, wenn es sich in der zweiten Position (72) befindet.

2. Kompressor (20) nach Anspruch 1, wobei:
die Ventilplatte (28) eine erste Seite (29) gegenüber dem Zylinder (24) und eine zweite Seite (31) parallel zu der ersten Seite (29) und benachbart zu dem Zylinder (24) beinhaltet.

3. Kompressor (20) nach Anspruch 2, ferner umfassend eine Wand (60), die mit der Ventilplatte (24) wirkgekoppelt ist, die zwischen dem Auslassanschluss (34) und dem Sauganschluss (32) positioniert ist.

4. Kompressor (20) nach Anspruch 3, wobei die Wand (60) senkrecht zu der Durchmesserachse (33) angeordnet ist.

5. Kompressor nach Anspruch 1, wobei es sich um einen Kolbenkompressor (20) handelt, der eine Saugkammer (64) und eine Auslasskammer (66) aufweist, wobei:
der Sauganschluss (32) in Fluidkommunikation mit der Saugkammer (64) ist,
die Ventilplatte (28) ferner den Auslassanschluss (34) in Fluidkommunikation mit der Auslasskammer (66) aufweist; und wobei
das erste Ende (44) des Ventilkörpers (38) zwischen einem Kurbelgehäuse (22) und der Ventilplatte (28) gekoppelt ist.

6. Kompressor (20) nach Anspruch 5, ferner umfassend:
ein Gehäuse (62), das eine Wand (60) aufweist, die die Saugkammer (64) von der Auslasskammer (66) trennt, wobei sich die Wand (60) senkrecht zu einem Ende des Gehäuses (62) erstreckt;
wobei das Kurbelgehäuse (22) an das Gehäuse (62) gekoppelt ist, wobei der Zylinder (24) in dem Kurbelgehäuse (22) angeordnet ist, wobei das Kurbelgehäuse (22) ferner die Aussparung (48) benachbart zu dem Zylinder (24) aufweist.

7. Kompressor (20) nach Anspruch 1, ferner umfassend:
ein Kurbelgehäuse (90), wobei der Zylinder (91) in dem Kurbelgehäuse (90) angeordnet ist;
ein Gehäuse (62), das an das Kurbelgehäuse (90) gegenüber der Ventilplatte (28) gekoppelt ist, wobei das Gehäuse (62) eine Wand (104) aufweist, die eine Saugkammer (64) und eine Auslasskammer (66) trennt, wobei der Sauganschluss (82) in Fluidkommunikation mit der Saugkammer (64) ist und der Auslassanschluss (102) in Fluidkommunikation mit der Auslasskammer (66) ist;
wobei das Ventil (86) ein Membranventil ist.

8. Kompressor (20) nach Anspruch 6 oder 7, wobei eine Wand (134) senkrecht zu einer Achse (156) zwischen einer Mitte (158) des Auslassanschlusses (130) und einer Mitte (148) des Sauganschlusses (128) ist.

9. Kompressor (20) nach Anspruch 1, wobei das erste Relief (52) eine Abschrägung ist.

## Revendications

1. Compresseur (20) comprenant :
un cylindre (24, 91) ayant un axe diamétral (33) ;
une plaque de soupape (28) recouvrant ledit cylindre (24), ladite plaque de soupape (28) ayant un orifice d'aspiration (32, 82, 128) et un orifice de décharge (34, 102, 130) ;
une soupape (36, 86) ayant un corps (38) avec une première extrémité (44) couplée à ladite plaque de soupape (28) et une seconde extrémité (46) mobile entre une première position (70) en contact avec ledit orifice d'aspiration (32, 82, 128) et une seconde position (72),
dans lequel ledit cylindre (24, 91) comporte un premier relief (52) formé sur un bord du cylindre (24, 91) adjacent à ladite première extrémité (44),
**caractérisé en ce que** l'orifice d'aspiration (32, 83, 128) et l'orifice de décharge (34, 102, 130) sont positionnés sur ledit axe diamétral (33), ladite soupape (36, 86) est agencée à un angle (41) par rapport audit axe diamétral (33), et un chanfrein (54) est formé à l'intérieur d'un évidement (48) au bord du cylindre (24, 91), le chanfrein (54) étant positionné pour entrer en contact avec la seconde extrémité (46) de la soupape (36, 86) lorsqu'il est dans la seconde position (72).

2. Compresseur (20) selon la revendication 1, dans lequel :
ladite plaque de soupape (28) comporte un premier côté (29) opposé audit cylindre (24), et un second côté (31) parallèle audit premier côté (29) et adjacent audit cylindre (24) .

3. Compresseur (20) selon la revendication 2, comprenant en outre une paroi (60) couplée de manière opérationnelle à ladite plaque de soupape (24) positionnée entre ledit orifice de décharge (34) et ledit orifice d'aspiration (32).

4. Compresseur (20) selon la revendication 3, dans lequel ladite paroi (60) est agencée perpendiculairement audit axe diamétral (33).

5. Compresseur selon la revendication 1 étant un compresseur à piston (20) ayant un plénum d'aspiration (64) et un plénum de décharge (66) dans lequel :
l'orifice d'aspiration (32) est en communication fluide avec ledit plénum d'aspiration (64), ladite plaque de soupape (28) ayant en outre l'orifice de décharge (34) en communication fluidique avec ledit plénum de décharge (66) ; et dans lequel
la première extrémité (44) dudit corps de soupape (38) est couplée entre un carter de moteur (22) et ladite plaque de soupape (28).

6. Compresseur (20) selon la revendication 5, comprenant en outre :
un logement (62) ayant une paroi (60) séparant ledit plénum d'aspiration (64) dudit plénum de décharge (66), dans lequel ladite paroi (60) s'étend perpendiculairement à une extrémité dudit logement (62) ;
le carter de moteur (22) couplé audit logement (62), dans lequel ledit cylindre (24) est agencé dans ledit carter de moteur (22), ledit carter de moteur (22) ayant en outre ledit évidement (48) adjacent audit cylindre (24).

7. Compresseur (20) selon la revendication 1, comprenant en outre :
un carter de moteur (90), dans lequel ledit cylindre (91) est agencé dans ledit carter de moteur (90) ;
un logement (62) couplé audit carter de moteur (90) à l'opposé de ladite plaque de soupape (28), ledit logement (62) ayant une paroi (104) séparant un plénum d'aspiration (64) et un plénum de décharge (66), dans lequel ledit orifice d'aspiration (82) est en communication fluidique avec ledit plénum d'aspiration (64) et ledit orifice de décharge (102) est en communication fluidique avec ledit plénum de décharge (66) ;
dans lequel ladite soupape (86) est une soupape flexible.

8. Compresseur (20) selon la revendication 6 ou7, dans lequel une paroi (134) est perpendiculaire à un axe (156) entre un centre (158) dudit orifice de décharge (130) et un centre (148) dudit orifice d'aspiration (128).

9. Compresseur (20) selon la revendication 1, dans lequel ledit premier relief (52) est un chanfrein.
